# EUROPÄISCHE PATENTSCHRIFT

(11) **EP 3 028 747 B1**
(45) Veröffentlichungstag und Bekanntmachung des Hinweises auf die Patenterteilung: **05.07.2017**
(21) Anmeldenummer: 15200209.3
(22) Anmeldetag: 16.06.2007
(51) Int. Cl.: A63B 5/11, A63B 21/055

(54) **TRAMPOLIN**
TRAMPOLINE
TRAMPOLINE

(30) Priorität: 19.06.2006 DE 102006028363
(43) Veröffentlichungstag der Anmeldung: 08.06.2016
(62) Teilanmeldung aus: 12006799.6
(73) Patentinhaber: Bellicon AG, 5454 Bellikon (CH)
(72) Erfinder: Pieper genannt Schmauck, Heinz Konrad, 51147 Köln (DE)
(74) Vertreter: Rätsch, Caroline

(56) Entgegenhaltungen:
- DE-A1- 2 504 875
- DE-A1- 10 226 707
- DE-U1- 29 919 912
- US-A- 2 991 841

## Beschreibung

Die Erfindung betrifft ein Trampolin mit einem Grundgestell, das einen Rahmen aufweist, und mit einem Sprungtuch, das vorzugsweise an seiner Unterseite Hakenelemente aufweist, wobei das Sprungtuch mit dem Rahmen über mehrere ringförmige Seilabschnitte verbunden ist, die jeweils den Rahmen zumindest teilweise umschlingen und in die Hakenelemente eingehängt sind.

Trampoline sind in der Physiotherapie und im Freizeitbereich weit verbreitet.

Bei den so genannten Mini-Trampolinen unterscheidet man zwischen Trampolinen mit einer Federaufhängung und einer Gummiseilringaufhängung. Bei der Federaufhängung ist das Sprungtuch über Spiralfedern an dem Rahmen befestigt. Eine derartige Federung stellt erhebliche Beschleunigungskräfte zur Verfügung und eignet sich daher insbesondere für sportliches Trainieren mit höheren Anforderungen an das Herz-KreislaufSystem.

Bei der Gummiseilaufhängung kommen ein oder mehrere elastische Seile oder Seilabschnitte zur Einsatz, die das Sprungtuch mit dem Rahmen verbinden. Die größere Elastizität einer derartigen Befestigung sorgt für ein "weicheres" Abbremsen des Körpers und ist daher vor allem bei Gelenk- und Rückenproblemen, in der Rehabilitation, zur Entspannung und Streßbekämpfung sowie für Kinder geeignet.

Ursprünglich war bei der Seilaufhängung lediglich ein einziges elastisches Seil vorgesehen, vgl. beispielsweise die DE 299 19 912 U1. Das Seil ist abwechselnd um den Rahmen des Trampolins gewunden und durch auf der Unterseite des Sprungtuchs angeordnete Schlaufen gezogen. Es hat sich jedoch in der Praxis gezeigt, dass das bekannte Trampolin in der Handhabung Nachteile aufweist. So wird das Befestigen des Sprungtuchs an dem Rahmen als umständlich empfunden. Auch können bei der Benutzung Schieflagen des Sprungtuchs in Bezug auf den Rahmen auftreten. Insbesondere aber muss das gesamte Seil ausgewechselt werden, wenn lediglich eine Stelle des Seils abgenutzt bzw. verschlissen ist.

Man ist daher dazu übergegangen, das Sprungtuch an mehreren ringförmigen Seilabschnitten aufzuhängen, die vorzugsweise an der Unterseite des Sprungtuchs befestigt und um den Rahmen geschlungen werden. Ein derartiges Trampolin ist beispielsweise aus der auf den Anmelder zurückgehenden DE 102 26 707 B4 bekannt. Gegenüber der Aufhängung des Sprungtuchs mit nur einem einzigen Seil vereint die Einzelseilaufhängung mehrere Vorteile. In erster Linie ist die Haltbarkeit deutlich erhöht. Darüber hinaus ist auch eine bessere (und kostengünstigere) Austauschbarkeit gegeben. Ist ein Seilabschnitt verschlissen, wird er einfach einzeln ausgetauscht. Die anderen Seilabschnitte bleiben unberührt. Schließlich sorgt die Einzelseilaufhängung stets für eine korrekte Zentrierung des Sprungtuchs. US 299 18 41 A1 offenbart ein Trampolin mit den Merkmalen des Oberbegriffs des Anspruchs 1.

Die Einzelseilaufhängung hat sich grundsätzlich bewährt. Es gilt jedoch das Bestreben, das bekannte Trampolin zu verbessern. Dies gilt insbesondere in Hinblick auf die Verschleißfestigkeit der Aufhängung.

Ausgehend von dem bekannten Stand der Technik liegt der Erfindung die **Aufgabe** zugrunde, bei Beibehaltung der guten Handhabbarkeit die Haltbarkeit des bekannten Trampolins zu verbessern.

Diese Aufgabe wird **gelöst** durch ein Trampolin mit den Merkmalen des Patentanspruchs 1.

Bevorzugt weisen die Hakenelemente einen ersten Aufnahmeabschnitt und einen zweiten Aufnahmeabschnitt auf, die derart getrennt voneinander angeordnet sind, dass sich die beiden beim Umschlingen eines Seilabschnitts um den Rahmen ergebenden in das Hakenelement eingehängten Schlaufenenden des Seilabschnitts nicht oder im Wesentlichen nicht berühren.

Der Erfindung liegt die Erkenntnis zugrunde, dass eine Relativbewegung zwischen den Hakenelementen und den Seilabschnitten bzw. zwischen den Schlaufenenden untereinander stattfindet, die zu einer vorzeitigen Zerstörung des Seilringes führen kann. Insbesondere bei Seilringen mit einer Ummantelung aus z. B. einem textilen oder Kunststoffgeflecht, wie sie heute häufig zum Einsatz kommen, besteht die Gefahr einer Beeinträchtigung durch Reibung. Erfindungsgemäß sind zur Vermeidung dieser Relativbewegung an dem Hakenelement zwei getrennte Aufnahmeabschnitte vorgesehen, die jeweils ein Schlaufenende aufnehmen und dafür sorgen, dass sich die Schlaufenenden nicht berühren. Die Steigerung der Lebensdauer ist erheblich.

Es sei an dieser Stelle darauf hingewiesen, dass in der Belastungs- und/oder Entlastungsphase der Fall auftreten kann, dass sich die Schlaufenenden geringfügig berühren, diese Berührung aber vernachlässigbar ist. Dieser Fall soll von der Erfindung umfasst sein.

Vorzugsweise sind der erste Aufnahmeabschnitt und der zweite Aufnahmeabschnitt durch einen Befestigungssteg zur Befestigung des Hakenelements an dem Sprungtuch getrennt. Der Befestigungssteg übernimmt dabei zwei Aufgaben, nämlich zum einen die Befestigung des Hakens an dem Sprungtuch und zum anderen die Trennung des ersten von dem zweiten Aufnahmeabschnitt. Vorzugsweise teilt der Befestigungssteg das Hakenelement symmetrisch.

Der Befestigungssteg kann auf vielfältige Weise am Sprungtuch befestigt sein. Bei herkömmlichen Trampolinen hat es sich bewährt, Niete zu verwenden. Der Erfindung jedoch liegt die weitere Erkenntnis zugrunde, dass es von Vorteil sein kann, wenn der Haken nicht starr am Sprungtuch festgelegt ist, sondern seinen Winkel in bestimmten Grenzen in Bezug auf das Sprungtuch verändern kann. Im Betrieb des Trampolins befindet sich das Hakenelement also stets in einem günstigen Winkel, bei dem eine Reibung minimal gehalten werden kann. In diesem Zusammenhang hat es sich als besonders vorteilhaft erwiesen, dass der Befestigungssteg an seinem rückwärtigen Ende eine Befestigungslasche aufweist, mittels der der Haken am Sprungtuch befestigbar ist. Vorteilhafterweise ist die Lasche geschlossen, und es greift eine flexible vom Sprungtuch abgehende Schlaufe durch die Lasche hindurch.

Die Lasche wird man in aller Regel horizontal und vorzugsweise im Wesentlichen in der Ebene des Sprungtuchs anordnen. Dadurch ist das Hakenelement vorteilhaft nach oben und/oder unten verschwenkbar und insoweit zweckmäßig stets in Zugrichtung des jeweiligen Seilabschnitts ausgerichtet. Als konstruktiv besonders günstig wird eine Anordnung angesehen, bei der im eingehängten Zustand des Seilabschnitts ein Schlaufenende oberhalb und ein Schlaufenende unterhalb des Befestigungsstegs angeordnet ist.

Vorzugsweise sind der erste Aufnahmeabschnitt und der zweite Aufnahmeabschnitt (in Haupt-Zugrichtung des jeweiligen Seilabschnitts) im Wesentlichen auf gleicher Höhe angeordnet. Eine derartige Konstruktion stellt sicher, dass die beiden Schlaufenenden bei einer Zugbelastung des Seilabschnitts in gleichem Maß gedehnt werden, so dass der jeweilige Seilring also keine Relativbewegung zwischen seinen Schlaufenenden erfährt. Eine Anordnung der Aufnahmeabschnitte auf i. W. gleicher Höhe hat ferner den Vorteil, dass etwaige Relativbewegungen zwischen dem Rahmen und dem Seilabschnitt minimal gehalten werden können.

Eine weitere vorteilhafte Maßnahme zur Minimierung des Verschleißes und damit Erhöhung der Lebensdauer zeichnet sich dadurch aus, dass der Querschnitt im Bereich der Aufnahmeabschnitte teilkreisförmig gerundet ist und vorzugsweise einen Winkel von mindestens 160°, insbesondere von ca. 180° aufweist. Es sind im Stand der Technik bereits gekrümmte Querschnitte bekannt; ein teilkreisförmiger Querschnitt, der im Übergangsbereich weich - beispielsweise tangential zu den Schlaufenenden - ausläuft, vermindert den Verschleiß gegenüber bekannten Lösungen jedoch noch einmal deutlich.

Über die geforderte Verschleißfestigkeit der Hakenelemente hinaus besteht eine wesentliche weitere Forderung in der Zuverlässigkeit der Aufhängungen bei der Benutzung von Trampolinen. In diesem Zusammenhang kann vorteilhaft vorgesehen sein, dass das Hakenelement zwei Seitenwände aufweist, die ein Herausgleiten bzw. Lösen des Seilabschnitts aus dem Hakenelement verhindern. Vorzugsweise gehen die Seitenwände im Wesentlichen senkrecht von dem jeweiligen Aufnahmeabschnitt ab. Eine derartige Konstruktion bietet hohe Zuverlässigkeit gepaart mit einer guten Handhabbarkeit des Trampolins. Insbesondere sind die Schlaufenenden leicht in den jeweiligen Aufnahmeabschnitt einhängbar.

Vorteilhafterweise verbreitern sich die Seitenwände zu ihrem freien Ende hin. Selbst bei einem raschen Zurückschnellen nach Belastung des Sprungtuchs in die Ausgangsstellung zurück sitzt jeder Seilabschnitt sicher in seinem zugeordneten Hakenelement. Ein Einhängen des Seilabschnitts in das Hakenelement wird bei unbelastetem Sprungtuch vorgenommen und ist trotz des verbreiterten Endes vollkommen unproblematisch.

Zusätzlich oder alternativ kann sich auch der Befestigungssteg zu seinem am Sprungtuch befestigten Ende hin verbreitern. An seinem breiten Ende bietet er beste Befestigungsmöglichkeiten an dem Sprungtuch und erhöhte Festigkeit während der Benutzung des Trampolins. Die Aufnahmeabschnitte hingegen können schmaler gewählt werden und weisen vorzugsweise - wie zuvor beschrieben - einen teilkreisrunden Querschnitt auf.

Das Hakenelement wird man insbesondere aus Kunststoff herstellen. Vorzugsweise ist das Hakenelement als Spritzgußteil hergestellt.

Im Folgenden wird die Erfindung anhand eines bevorzugten Ausführungsbeispiels im Zusammenhang mit der anhängenden **Zeichnung** näher erläutert. Die Zeichnung zeigt in:
- Figur 1: einen Ausschnitt eines erfindungsgemäßen Trampolins in einer Ansicht von unten;
- Figur 2: das erfindungsgemäße Hakenelement in perspektivischer Darstellung;
- Figur 3: eine erste Seitenansicht des erfindungsgemäßen Hakenelements; und
- Figur 4: eine zweite Seitenansicht des erfindungsgemäßen Hakenelements.

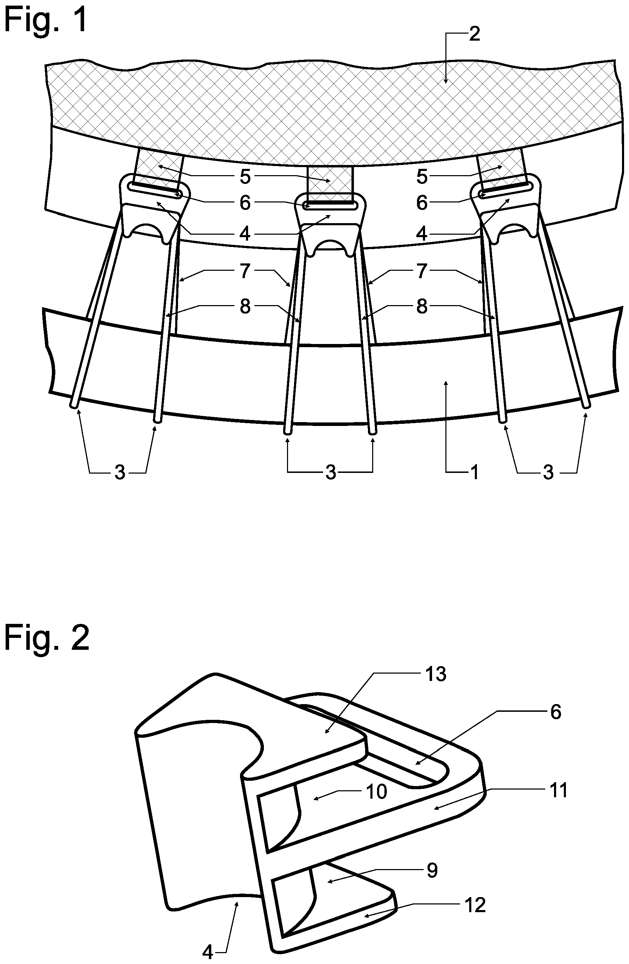

Figur 1 zeigt in einer Ansicht von unten einen Ausschnitt eines erfindungsgemäßen Trampolins. Dieses weist einen Rahmen 1 und ein flexibles Sprungtuch 2 auf, das über ringförmige Seilabschnitte 3 mit dem Rahmen verbunden ist. Bei den Seilabschnitten 3 handelt es sich um elastische Seilringe mit einem Gummikern und einer Ummantelung aus einem textilen oder Kunststoffgeflecht.

Auf der Unterseite des Sprungtuchs 2 sind Hakenelemente 4 an dem Sprungtuch befestigt, wobei mit dem Sprungtuch Schlaufen 5 vernäht sind, die jeweils durch eine Lasche 6 des Hakenelements hindurchgreifen. Hierdurch ist das Hakenelement 4 beweglich und insbesondere schwenkbar mit dem Sprungtuch 2 verbunden. Alternativ können die Hakenelemente 4 auch außen am Sprungtuch 2 befestigt sein. Dann jedoch sind sie nicht von oben durch das Sprungtuch 4 oder eine dem Sprungtuch zugeordnete Abdeckung geschützt, so dass insoweit die Befestigung an der Unterseite bevorzugt wird.

Die Seilabschnitte 3 sind um den Rahmen 1 des Trampolins geschlungen, und zwar derart, dass jeweils ein Schlaufenende 7, 8 in das Hakenelement 4 eingehängt ist. Bei dem dargestellten Ausführungsbeispiel ist das Schlaufenende 7 oberhalb des Schlaufenendes 8 angeordnet. Grundsätzlich ist erfindungsgemäß vorgesehen, dass sich die Schlaufenenden 7, 8 nicht gegenseitig berühren.

Es wird auf Figur 2 Bezug genommen, in der das erfindungsgemäße Hakenelement 4 in vergrößertem Maßstab und in einer perspektivischen Darstellung gezeigt ist. Das Hakenelement 4 weist zwei Aufnahmeabschnitte 9, 10 auf, in die der (hier nicht gezeigte) Seilabschnitt eingehängt ist. Die beiden Aufnahmeabschnitte 9, 10 sind durch einen Befestigungssteg 11 voneinander getrennt, der in seinem rückwärtigen Ende die bereits in Figur 1 angesprochene Lasche 6 zur Befestigung an dem Sprungtuch aufweist.

Seitlich ist jeweils eine Seitenwand 12, 13 angeordnet, die senkrecht von dem jeweiligen Aufnahmeabschnitt 9, 10 abgeht und dafür sorgt, dass ein eingehängtes Seil auch bei Benutzung des Trampolins sicher in den Aufnahmeabschnitten bleibt.

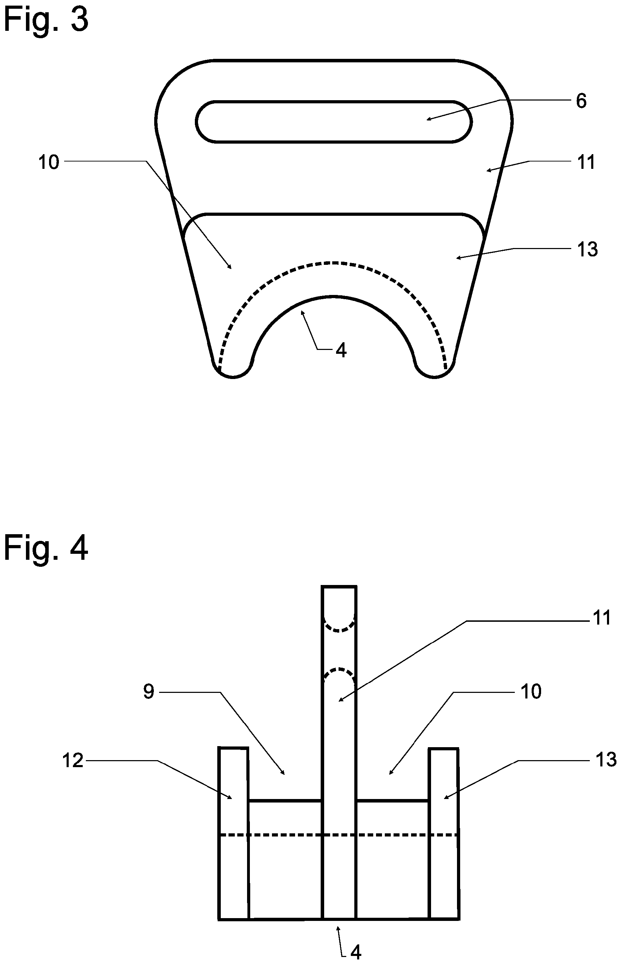

Die Figuren 3 und 4 zeigen Seitenansichten des erfindungsgemäßen Hakenelements 4. Sowohl die Seitenwände 12, 13 als auch der Befestigungssteg 11 verbreiten sich zu ihrem freien Ende hin. Dies gewährleistet einen sicheren Halt der Seilabschnitte in den Aufnahmeabschnitten 9, 10. Gleichzeitig ist eine gute Zugänglichkeit zum Aus- und Einhaken gewährleistet.

Wie es insbesondere in Figur 3 zu sehen ist, sind die Aufnahmeabschnitte 9, 10, von denen hier nur der Aufnahmeabschnitt 10 angedeutet ist, abgerundet ausgebildet, und zwar im Querschnitt teilkreisförmig. Die aufgenommenen Schlaufenenden erfahren dadurch kaum Reibungswiderstand und können verschleißarm abgleiten.

### Bezugszeichenliste

- 1: Rahmen
- 2: Sprungtuch
- 3: Seilabschnitt
- 4: Hakenelement
- 5: Schlaufe
- 6: Lasche
- 7: Schlaufenende
- 8: Schlaufenende
- 9: Aufnahmeabschnitt
- 10: Aufnahmeabschnitt
- 11: Befestigungssteg
- 12: Seitenwand
- 13: Seitenwand

## Patentansprüche

1. Trampolin, mit
- einem Grundgestell, das einen Rahmen (1) aufweist, und mit
- einem Sprungtuch (2), das Hakenelemente (4) aufweist,
- wobei das Sprungtuch (2) mit dem Rahmen (1) über mehrere ringförmige Seilabschnitte (3) verbunden ist, die jeweils den Rahmen (1) zumindest teilweise umschlingen und in die Hakenelemente (4) eingehängt sind,
- wobei die Hakenelemente (4) am Sprungtuch (2) befestigt sind, **dadurch gekennzeichnet,**
- **dass** mit dem Sprungtuch (2) Schlaufen (5) vernäht sind, und
- **dass** die Schlaufen (5) jeweils durch eine Lasche (6) des Hakenelements (4) hindurchgreifen.

2. Trampolin nach Anspruch 1, **dadurch gekennzeichnet**, das die Hakenelemente (4) auf der Unterseite des Sprungtuchs (2) oder außen am Sprungtuch (2) befestigt sind.

3. Trampolin nach Anspruch 1 oder 2, **dadurch gekennzeichnet, dass** die Lasche (6) horizontal und vorzugsweise im wesentlichen in der Ebene des Sprungtuchs (2)angeordnet ist.

4. Trampolin nach einem der Ansprüche 1 bis 3, **dadurch gekennzeichnet, dass** die Hakenelemente (4) jeweils einen ersten Aufnahmeabschnitt (9) und einen zweiten Aufnahmeabschnitt (10) zum Einhängen eines Seilabschnitts (3) aufweisen.

5. Trampolin nach Anspruch 4, **dadurch gekennzeichnet, dass** der erste Aufnahmeabschnitt (9) und der zweite Aufnahmeabschnitt (10) durch einen Befestigungssteg (11) getrennt sind, und dass der Befestigungssteg (11) an seinem rückwärtigen Ende eine Befestigungslasche (6) aufweist, mittels der das jeweilige Hakenelement (4) an dem Sprungtuch befestigt ist.

6. Trampolin nach Anspruch 4 oder 5, **dadurch gekennzeichnet, dass** der erste und der zweite Aufnahmeabschnitt (9; 10) im Wesentlichen auf gleicher Höhe angeordnet sind.

7. Trampolin nach einem der Ansprüche 4 bis 6, **dadurch gekennzeichnet, dass** der Querschnitt im Bereich der Aufnahmeabschnitte (9; 10) teilkreisförmig gerundet ist und vorzugsweise einen Winkel von ca. 180° aufweist.

8. Trampolin nach einem der Ansprüche 1 bis 7, **dadurch gekennzeichnet, dass** die Befestigungslasche (6) geschlossen ist.

9. Trampolin nach einem der Ansprüche 1 - 8, **dadurch gekennzeichnet, dass** die Hakenelemente jeweils zwei Seitenwände (12; 13) aufweisen, die ein Herausgleiten des Seilabschnitts (3) aus dem jeweiligen Hakenelement verhindern.

10. Trampolin nach Anspruch 9, **dadurch gekennzeichnet, dass** die Seitenwände (12; 13) im Wesentlichen senkrecht von dem jeweiligen Aufnahmeabschnitt (9; 10) abgehen.

11. Trampolin nach Anspruch 9 oder 10, **dadurch gekennzeichnet, dass** sich die Seitenwände (12; 13) zu ihrem freien Ende hin verbreitern.

12. Trampolin nach Anspruch 5, **dadurch gekennzeichnet, dass** sich der Befestigungssteg (11) zu seinem am Sprungtuch (2) befestigten Ende hin verbreitert.

## Claims

1. A trampoline including
- a base, which includes a frame (1) and concluding
- a jumping sheet (2), which has hook elements (4)
- wherein the jumping sheet (2) is connected to the frame (1) by means of a plurality of annular strap sections (3), which each extend at least partially around the frame (1) and are inserted into the hook elements,
- wherein the hook elements (4) are fastened to the jumping sheet (2),
**characterized in**
- **that** loops (5) are sewn to the jumping sheet (2) and
- **that** the loops (5) each pass through an opening (6) in the hook element (4).

2. A trampoline as claimed in Claim 1, **characterized in that** the hook elements (4) are fastened on the underside of the jumping sheet (2) or externally to the jumping sheet (2).

3. A trampoline as claimed in Claim 1 or 2, **characterized in that** the opening (6) is arranged horizontally and preferably substantially in the plane of the jumping sheet (2).

4. A trampoline as claimed in one of Claims 1 - 3, **characterized in that** the hook elements (4) each have a first receiving section (9) and a second receiving section (10) for inserting an annular strap section (3).

5. A trampoline as claimed in Claim 4, **characterized in that** the first receiving section (9) and the second receiving section (10) are separated by a connecting web (11), and **in that** the connecting web (11) has a connecting opening (6) at its rear end, by means of which the respective hook element (4) is connected to the jumping sheet.

6. A trampoline as claimed in Claim 4 or 5, **characterized in that** the first and the second receiving section (9; 10) are arranged substantially at the same height.

7. A trampoline as claimed in one of Claims 4 - 6, **characterized in that** the cross-section in the region of the receiving sections (9; 10) is of part-circular rounded shape and preferably has an angle of ca. 180°.

8. A trampoline as claimed in one of Claims 1 - 7, **characterized in that** the connecting opening (6) is closed.

9. A trampoline as claimed in one of Claims 1 - 8, **characterized in that** the hook element has two side walls (12; 13), which prevent sliding of the strap section (3) out of the hook element.

10. A trampoline as claimed in Claim 9, **characterized in that** the side walls (12; 13) project substantially perpendicularly from the associated receiving section (9; 10).

11. A trampoline as claimed in Claim 9 or 10, **characterized in that** the side walls (12; 13) broaden towards their free ends.

12. A trampoline as claimed in Claim 5, **characterized in that** the connecting web (11) broadens towards its end connected to the jumping sheet (2).

## Revendications

1. Trampoline, comprenant
- un châssis de base, qui présente un cadre (1) et
- une toile de saut (2) qui présente des éléments de crochets (4),
- la toile de saut (2) étant connectée au cadre (1) par le biais de plusieurs portions de câble annulaires (3) qui entourent à chaque fois au moins en partie le cadre (1) et sont accrochées dans les éléments de crochets (4),
- les éléments de crochets (4) étant fixés à la toile de saut (2),
**caractérisé en ce que**
- des boucles (5) sont cousues à la toile de saut (2) et
- les boucles (5) viennent en prise à chaque fois à travers une patte (6) de l'élément de crochet (4).

2. Trampoline selon la revendication 1, **caractérisé en ce que** les éléments de crochets (4) sont fixés au côté inférieur de la toile de saut (2) ou à l'extérieur sur la toile de saut (2).

3. Trampoline selon la revendication 1 ou 2, **caractérisé en ce que** la patte (6) est disposée horizontalement et de préférence essentiellement dans le plan de la toile de saut (2).

4. Trampoline selon l'une quelconque des revendications 1 à 3, **caractérisé en ce que** les éléments de crochets (4) présentent à chaque fois une première portion de réception (9) et une deuxième portion de réception (10) pour l'accrochage d'une portion de câble (3). -

5. Trampoline selon la revendication 4, **caractérisé en ce que** la première portion de réception (9) et la deuxième portion de réception (10) sont séparées par une nervure de fixation (11) et **en ce que** la nervure de fixation (11) présente au niveau de son extrémité arrière une patte de fixation (6) au moyen de laquelle l'élément de crochet respectif (4) est fixé à la toile de saut.

6. Trampoline selon la revendications 4 ou 5, **caractérisé en ce que** la première et la deuxième portion de réception (9 ; 10) sont disposées essentiellement à la même hauteur.

7. Trampoline selon l'une quelconque des revendications 4 à 6, **caractérisé en ce que** la section transversale est arrondie en forme de cercle partiel dans la région des portions de réception (9 ; 10) et présente de préférence un angle d'environ 180°.

8. Trampoline selon l'une quelconque des revendications 1 à 7, **caractérisé en ce que** la patte de fixation (6) est fermée.

9. Trampoline selon l'une quelconque des revendications 1 à 8, **caractérisé en ce que** les éléments de crochet présentent chacun deux parois latérales (12 ; 13) qui empêchent un glissement de la portion de câble (3) hors de l'élément de crochet respectif.

10. Trampoline selon la revendication 9, **caractérisé en ce que** les parois latérales (12 ; 13) partent essentiellement perpendiculairement depuis la portion de réception respective (9 ; 10).

11. Trampoline selon la revendication 9 ou 10, **caractérisé en ce que** les parois latérales (12 ; 13) s'élargissent vers leur extrémité libre.

12. Trampoline selon la revendication 5, **caractérisé en ce que** la nervure de fixation (11) s'élargit vers son extrémité fixée à la toile de saut (2).
